(19) Europäisches Patentamt / European Patent Office / Office européen des brevets

(11) **EP 4 787 024 A1**

(12) **DEMANDE DE BREVET EUROPEEN**

(43) Date de publication:
**05.08.2026 Bulletin 2026/32**

(21) Numéro de dépôt: **26155814.2**

(22) Date de dépôt: **02.02.2026**

(51) Classification Internationale des Brevets (IPC):
*G01S 19/20* [(2010.01)]  *G01S 11/02* [(2010.01)]
*G01S 19/08* [(2010.01)]  *G01S 19/10* [(2010.01)]

(52) Classification Coopérative des Brevets (CPC):
**G01S 19/20;** G01S 11/02; G01S 19/08; G01S 19/10

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **03.02.2025 FR 2501055**

(71) Demandeur: **THALES**
**92190 Meudon (FR)**

(72) Inventeurs:
• HEURGUIER, Dominique
**92622 GENNEVILLIERS CEDEX (FR)**
• VINCE, Victor
**92622 GENNEVILLIERS CEDEX (FR)**

(74) Mandataire: **Lavoix**
**2, place d'Estienne d'Orves**
**75441 Paris Cedex 09 (FR)**

(54) **MÉTHODE DE VÉRIFICATION D'INTÉGRITÉ DE MESURES GNSS PAR HYBRIDATION AVEC DES MESURES RADIO**

(57) La présente invention concerne une méthode de vérification de l'intégrité de mesures GNSS effectuées par une pluralité de récepteurs GNSS embarqués sur des plateformes mobiles connectées. Dans une première étape, on construit (110, 120) un premier vecteur d'observation ($Y^{sat}$) donnant, pour chaque récepteur GNSS, les pseudodistances satellitaires et un second vecteur d'observation ($Y^{rad}$) donnant, pour chaque émetteur/récepteur radio, les pseudodistances radio, ces deux vecteurs d'observation étant agrégés pour former un vecteur d'observation hybride *(Y)*. On calcule ensuite (140) une matrice géométrique globale ($H_G$) permettant de passer d'un vecteur d'état (*X*) représentatif des positions et décalages d'horloge interne desdits récepteurs GNSS embarqués au dit vecteur d'observation hybride (*Y*). On détermine enfin (150) une matrice de parité (*Π*) associée à la matrice géométrique globale, et on en déduit (160) la valeur d'une variable de décision *(T)* comme norme quadratique de la projection du vecteur d'observation hybride *(Y)* sur l'espace de parité. Ladite valeur de la variable de décision est alors comparée (170) à un seuil prédéterminé (s) pour décider si les mesures GNSS sont corrompues (180) ou intègres (190).

FIG.1

```
mesure des pseudodistances GNSS par
chaque plateforme mobile
construction du vecteur Y^sat          110

        ↓

mesure des pseudodistances radio par
chaque plateforme mobile
construction du vecteur Y^rad          120

        ↓

agrégation des observables
construction du vecteur hybride Y      130

        ↓

calcul de la matrice géométrique globale
H_G à partir des vecteurs directeurs   140

        ↓

calcul de la matrice de parité Π associée
à H_G                                  150

        ↓

calcul d'une variable de décision, T, par
projection de Y sur l'espace de parité 160

        ↓

170  ◇ T>s ◇  — N →  mesures GNSS intègres  190
        │ Y
        ↓
défaut d'intégrité des mesures GNSS
levée d'une alarme                     180
```

EP 4 787 024 A1

**Description**

## DOMAINE TECHNIQUE

La présente invention concerne de manière générale le domaine du positionnement et de la navigation GNSS (*Global Navigation Satellite System*), et plus particulièrement celui de la vérification de l'intégrité de mesures GNSS. Elle peut notamment être mise en œuvre par un essaim de plateformes mobiles équipées de récepteurs GNSS, connectées par un réseau de type MANET (*Mobile Ad hoc NETwork*), VANET (*Vehicle Ad hoc NETwork*), ou FANET ( *Flying Ad hoc NETwork*).

## ÉTAT DE LA TECHNIQUE ANTÉRIEURE

Les systèmes de positionnement satellitaires GPS, GALILEO, GLONASS, BEIDOU sont bien connus de l'état de la technique sous l'acronyme général GNSS. De manière classique, ces systèmes satellitaires permettent à un récepteur GNSS d'estimer sa position par multilatération à partir de signaux synchronisés reçus d'au moins quatre satellites. Outre sa position, le récepteur GNSS peut estimer sa vitesse et le temps de l'horloge satellitaire, les trois paramètres estimés étant regroupés sous le terme PVT (*Position Velocity Time*).

Les systèmes de positionnement satellitaires sont généralement très fiables. Toutefois, l'horloge d'un satellite peut occasionnellement dériver par rapport à l'horloge de référence de la constellation. Lorsqu'une telle situation est détectée, le segment sol déclare le satellite inopérationnel le temps d'effectuer des tests et de rétablir la synchronisation. Cependant durant l'intervalle séparant la perte effective de synchronisation et la détection de cette perte par le segment sol, les mesures de pseudodistances relatives à ce satellite sont erronées. Dans d'autres circonstances, les signaux GNSS peuvent faire l'objet de leurrage (*spoofing*) par rediffusion ou interférence, conduisant à des erreurs de positionnement aux conséquences potentiellement catastrophiques pour la navigation aérienne ou terrestre.

Il est donc essentiel de pouvoir disposer d'une méthode de vérification de l'intégrité des signaux GNSS qui puisse détecter rapidement la corruption d'un signal GNSS reçu d'un satellite et, le cas échéant, l'exclure pour l'estimation de la position du récepteur. Différentes méthodes ont été proposées à cet effet, notamment la méthode dite RAIM (*Receiver Autonomous Integrity Monitoring*) qui exploite une redondance des mesures de pseudodistances avec au moins 5 satellites. On trouvera notamment une description de cette méthode dans l'article de M. Joerger et al. intitulé « Fault detection and exclusion using solution separation and Chi-squared RAIM » publié dans IEEE Trans. on Aerospace and Electronic Systems, Vol. 52, No. 2, avril 2016, pp. 726-742. La méthode RAIM présente l'avantage de permettre une détection rapide d'un défaut d'intégrité (car ne recourant pas au segment sol) mais est relativement peu précise. Alternativement, d'autres méthodes de détection de défaut d'intégrité font appel à des mesures par des stations au sol (DGNSS) mais présentent des temps de latence sensiblement plus longs.

Plus récemment, l'article de J. Rife intitulé « Collaboration-enhanced receiver integrity monitoring » publié dans Proc. of the 14th Intl' IEEE Conf. on Intelligent Transportation Systems, Oct. 5-7, 2011, pp. 13-14 a divulgué une méthode collaborative de vérification d'intégrité de signaux GNSS lorsque les récepteurs sont organisés selon un réseau sans fil *V2V* (*Vehicle-to-Vehicle*). Selon cette méthode, dénommée CERIM, les résidus de prédiction de position sont partagés entre récepteurs ayant au moins 5 satellites en visibilité et une statistique globale portant sur l'ensemble de ces résidus est ensuite construite pour améliorer la sensibilité de la détection. Cette méthode permet une détection plus sensible d'un défaut d'intégrité par rapport à la méthode RAIM tout en assurant un temps de latence comparable.

Le but de la présente invention est d'améliorer davantage la sensibilité du contrôle d'intégrité lorsque les récepteurs GNSS sont organisés selon un réseau sans fil, par exemple de type MANET, VANET ou FANET, tout en garantissant un faible temps de latence de la détection d'un défaut d'intégrité.

A cet effet, l'invention a pour objet une méthode de vérification de l'intégrité de mesures GNSS effectuées par une pluralité de récepteurs GNSS embarqués sur des plateformes mobiles connectées, chaque récepteur GNSS embarqué recevant des signaux GNSS d'une pluralité de satellites qu'il a en visibilité, chaque plateforme mobile étant en outre équipée d'un émetteur/récepteur radio adapté à émettre et à recevoir un signal de synchronisation radio, ladite méthode étant originale en ce que :

- on construit un premier vecteur d'observation ($Y^{sat}$) donnant, pour chaque récepteur GNSS, les pseudodistances mesurées par ce récepteur, dites pseudodistances satellitaires, le séparant des satellites qu'il a en visibilité et un second vecteur d'observation ($Y^{rad}$) donnant, pour chaque émetteur/récepteur radio, les pseudodistances mesurées par cet émetteur/récepteur radio, dites pseudodistances radio, le séparant des autres émetteurs/ récepteurs radio ;
- on agrège les pseudodistances satellitaires et les pseudodistances radio en concaténant les premier et second vecteurs d'observation pour former un vecteur d'observation hybride ($Y$) ;
- on calcule une matrice géométrique globale ($H_G$) permettant de passer d'un vecteur d'état ($X$) représentatif des positions et des décalages d'horloge interne respectifs desdits récepteurs GNSS embarqués au dit vecteur d'observation hybride **(Y),** ladite matrice géométrique globale étant obtenue à partir des vecteurs directeurs ($u_{i,j}$) des droites joignant chaque récepteur GNSS aux satellites qu'il a en visibilité, d'une part, et des vecteurs directeurs ($v_{i,n}$) des droites joignant chaque émetteur/récepteur radio aux autres émetteurs récepteurs radio, d'autre part ;

- on calcule une matrice de parité ($\Pi$) associée à ladite matrice géométrique globale, les vecteurs colonne de la matrice de parité engendrant un espace, dit espace de parité, orthogonal à l'espace engendré par les vecteurs colonne de ladite matrice géométrique ;

- on calcule la valeur d'une variable de décision ($T$) comme norme quadratique de la projection du vecteur d'observation hybride **(Y)** sur l'espace de parité ;

- on compare ladite valeur de la variable de décision à un seuil prédéterminé ($s$) et, si cette valeur excède ladite valeur de seuil, les mesures GNSS sont considérées comme corrompues et, dans le cas contraire, sont considérées comme intègres.

Avantageusement, la matrice géométrique globale $H_G$ est obtenue comme $H_G = \begin{bmatrix} H^{sat} \\ H^{rad} \end{bmatrix}$ où $H_G = \begin{bmatrix} H_1^{sat} \\ \vdots \\ H_N^{sat} \end{bmatrix}$

est une matrice de taille $K^{sat} \times 4$ avec $H_i^{sat} = \begin{bmatrix} -u_{i,j(1)}^T & 1 \\ \vdots & \vdots \\ -u_{i,j(K_i^{sat})}^T & 1 \end{bmatrix}$ matrice de taille $K_i^{sat} \times 4$ où les vecteurs $u_{i,j(1)}, \ldots, u_{i,}$

$_{j(Ki)}$ sont les vecteurs directeurs des droites joignant le récepteur GNSS embarqué sur la plateforme mobile $PT_i$ et les

satelittes $SAT_{j(1)}, \ldots, SAT_{j(K_i^{sat})}$ en visibilité du récepteur GNSS $RX_i$ et $H^{rad} = \begin{bmatrix} \vdots & \vdots \\ -v_{i,n}^T & 1 \\ \vdots & \vdots \\ v_{i,n}^T & -1 \\ \vdots & \vdots \end{bmatrix}$ est une matrice de

taille $K^{rad} \times 4$ où $v_{i,n}$ est le vecteur directeur de la droite joignant l'émetteur/récepteur radio de la plateforme mobile $PT_i$ et l'émetteur récepteur radio de la plateforme mobile $PT_n$, $K^{sat}$ étant le nombre total de pseudodistances satellitaires et $K^{rad}$ étant le nombre total de pseudodistances radio.

La matrice de parité, $\Pi$, associée à ladite matrice géométrique globale, $H_G$, est obtenue de préférence à partir de

$\Pi^T \left( \Gamma_G^{-1/2} H_G \right) = 0$ où $\Gamma_G$ est une matrice diagonale donnant la covariance des pseudodistances.

La variable de décision $T$ peut être choisie comme la norme quadratique, $T = P^T P$, du vecteur $P$, projection de **Y** sur l'espace de parité avec $P = \Pi \Gamma_G^{-1/2} Y$.

Le seuil est avantageusement déterminé par $s = \sqrt{F_{\chi^2}^{-1}\left(1 - P_{fa}, K^{sat} + K^{rad} - 4N\right)}$ où $F_{\chi^2}^{-1}(., L)$

est la fonction de répartition inverse de la loi du $\chi^2$ à $L$ degrés de liberté, $P_{fa}$ est une probabilité souhaitée de fausse alarme, $K^{sat}$ est le nombre total de pseudodistances satellitaires, $K^{rad}$ est le nombre total de pseudodistances radio et $N$ est le nombre de plateformes mobiles.

Selon un exemple de réalisation de l'invention, si les mesures GNSS sont considérées comme corrompues, on élimine tour à tour une pseudodistance satellitaire et on applique la méthode de vérification sur les mesures GNSS restantes.

Selon un autre exemple de réalisation de l'invention, si les mesures GNSS sont considérées comme corrompues, une alarme est transmise à l'ensemble des plateformes mobiles.

Selon un mode de réalisation centralisée de l'invention, chaque récepteur GNSS embarqué sur une plateforme mobile mesure les pseudodistances satellitaires qui le sépare des satellites qu'il a en visibilité et les transmet à une unité de gestion centralisée qui les agrège pour former le premier vecteur d'observation, **$Y^{sat}$**, et chaque émetteur/ récepteur radio mesure les pseudodistances radio qui le sépare des autres émetteurs/récepteurs radio et les transmet à ladite unité de gestion centralisée qui les agrège pour former le second vecteur d'observation, **$Y^{rad}$**.

Chaque récepteur GNSS embarqué sur une plateforme mobile estime alors sa position de manière autonome au moyen des pseudodistances satellitaires qu'il a mesurées et transmet cette estimation au centre de gestion centralisée.

De même, chaque récepteur GNSS embarqué sur une plateforme mobile estime la position des satellites qu'il a en visibilité à partir des messages d'éphémérides qu'ils envoient et transmet cette estimation au centre de gestion centralisée.

Selon un mode de réalisation distribuée de l'invention, chaque récepteur GNSS embarqué sur une plateforme mobile mesure les pseudodistances satellitaires qui le sépare des satellites qu'il a en visibilité et les diffuse aux autres plateformes mobiles et chaque émetteur/ récepteur radio équipant une plateforme mobile mesure les pseudodistances radio qui le sépare des autres émetteurs/récepteurs radio et les diffuse aux autres plateformes mobiles, chaque plateforme mobile agrégeant les pseudodistances satellitaires et les pseudodistances radio pour former ledit vecteur d'observation hybride, **Y**.

Chaque récepteur GNSS embarqué sur une plateforme mobile estime alors sa position de manière autonome au moyen des pseudodistances satellitaires qu'il a mesurées et diffuse cette estimation aux autres plateformes mobiles, chaque plateforme mobile en déduisant les vecteurs directeurs ($u_{i,j}$) des droites joignant chaque récepteur GNSS aux satellites qu'il a en visibilité, d'une part, et les vecteurs directeurs ($v_{i,n}$) des droites joignant chaque émetteur/récepteur radio aux autres émetteurs récepteurs radio, d'autre part, et construisant la matrice géométrique globale $H_G$.

## BRÈVE DESCRIPTION DES DESSINS

L'invention apparaîtra plus clairement à la lecture de la description qui va suivre, donnée uniquement à titre d'exemple non limitatif, et faite en référence aux dessins dans lesquels :

[Fig. 1] La figure 1 illustre de manière schématique une méthode de vérification d'intégrité de mesures GNSS selon un mode général de réalisation de l'invention ;
[Fig. 2] La figure 2 illustre de manière schématique une méthode de vérification d'intégrité de mesures GNSS selon un premier mode particulier de réalisation de l'invention ;
[Fig. 3] La figure 3 illustre de manière schématique une méthode de vérification d'intégrité de mesures GNSS selon un second mode particulier de réalisation de l'invention.

## EXPOSÉ DÉTAILLÉ DES MODES DE RÉALISATION

On considérera dans la suite un système de positionnement satellitaire GNSS composé d'une constellation de satellites notés $SAT_1, SAT_2, ..., SAT_M$, ainsi qu'une pluralité de plateformes mobiles $PT_1, PT_2, ..., PT_N$ équipées de récepteurs GNSS, notés $RX_1, RX_2, ..., RX_N$ susceptibles de recevoir des signaux GNSS émis par ces satellites. Le système de positionnement GNSS pourra être notamment un système GPS, GALILEO, GLONASS ou BEIDOU. Les plateformes mobiles pourront être par exemple des nœuds de réseaux *ad hoc* tels que les réseaux MANET, VANET ou FANET précités ou bien encore des terminaux mobiles d'un réseau de communication sans fil. On suppose dans tous les cas que les plateformes mobiles peuvent émettre et recevoir des signaux de synchronisation radio. Par signal de synchronisation radio on entend un signal comportant des caractéristiques permettant à un récepteur d'identifier son émetteur et de discriminer un instant de synchronisation dans une trame temporelle, par exemple un début d'intervalle d'accès dans un système de communication TDMA, un palier dans un système de communication à sauts de fréquence, le début d'une séquence d'apprentissage (pour estimer la réponse impulsionnelle d'un canal de transmission), un entête de synchronisation, etc. La plupart des réseaux mobiles *ad hoc* utilisent des protocoles de communication ayant recours à de telles séquences de synchronisation.

Les plateformes mobiles $PT_1, PT_2, ..., PT_N$ ainsi équipées sont capables de mesurer, d'une part, les temps d'arrivée des séquences satellitaires et d'en déduire les pseudodistances correspondantes et, d'autre part, les temps d'arrivée des séquences de synchronisation radio émises par les nœuds voisins du réseau. Par souci de simplicité, la position d'une platerforme mobile est supposée confondue avec celle du récepteur GNSS et de l'émetteur/récepteur des signaux de synchronisation radio.

Pour une plateforme mobile $PT_i$ donnée, on note dans la suite $\rho_{i,j}$ la pseudodistance vis-à-vis du satellite $SAT_j$, mesurée à partir de la séquence PRN émise par celui-ci et $D_{in}$ la pseudodistance mesuré par rapport à la plateforme mobile $PT_n$, à partir du signal de synchronisation radio émis par cette dernière. Ces pseudodistances peuvent s'exprimer de la manière suivante :

$$\rho_{i,j}^{sat} = c\left(ToA_{i,j}^{sat} + \delta t_i^{sat} - Te_j^{sat} + \varepsilon_{i,j}\right) = d_{i,j}^{sat} + c.\delta t_i^{sat} + c.\varepsilon_{i,j} \qquad (1\text{-}1)$$

$$\rho_{i,n}^{rad} = c\left(ToA_{i,n}^{rad} + \delta t_i^{rad} - Te_n^{rad} - \delta t_n^{rad} + \eta_{i,n}\right) = d_{i,n}^{rad} + c.\left(\delta t_i^{rad} - \delta t_n^{rad}\right) + c.\eta_{i,n}$$

$$(1\text{-}2)$$

où $\rho_{i,j}^{sat}$ et $\rho_{i,n}^{rad}$ sont respectivement les pseudodistances mesurées par la plateforme $PT_i$, relatives au satellite $SAT_j$ et à la plateforme mobile $PT_n$, $c$ est la vitesse de la lumière dans le vide, $ToA_{i,j}^{sat}$ est le temps d'arrivée de la séquence satellitaire émise par le satellite $SAT_j$, $\delta t_i^{sat}$ est la dérive de l'horloge interne du récepteur GNSS hébergé par la plateforme $PT_i$ par rapport à l'horloge de référence de la constellation satellitaire, $Te_j^{sat}$ est le temps d'émission de la séquence satellitaire, $ToA_{i,n}^{rad}$ est le temps d'arrivée de la séquence de synchronisation radio émise par la plateforme $PT_n$ (mesuré au moyen de l'horloge interne de l'émetteur/récepteur radio de la plateforme $PT_i$), $\delta t_i^{rad}$ - $\delta t_n^{rad}$ est la dérive relative de l'horloge de l'émetteur/récepteur radio de la plateforme $PT_i$ par rapport à celle de la plateforme $PT_n$, $Te_n^{rad}$ est le temps d'émission du signal de synchronisation radio (mesuré au moyen de l'horloge interne de l'émetteur/récepteur radio de la plateforme $PT_n$, et enfin $\varepsilon_{i,j}$, $\eta_{i,n}$ sont des écarts temporels résiduels dûs aux erreurs non prises en compte dans le modèle et au bruit. La distance géométrique entre le satellite $SAT_j$ et la plateforme est notée $d_{i,j}^{sat}$ et la celle séparant les plateformes $PT_i$ et $PT_n$ est notée $d_{i,n}^{rad}$.

Les plateformes mobiles sont situées dans une zone géographique $Z$ de faible étendue spatiale. Par faible étendue spatiale, on entend que les distances entre ces plateformes sont sensiblement inférieures aux distances séparant ces plateformes et les satellites du système de positionnement GNSS. En d'autres termes, pour deux plateformes mobiles quelconques situées dans la zone $Z$, on pourra considérer que les vecteurs directeurs des droites joignant ces plateformes à un satellite quelconque de la configuration (ou vecteurs de visée de ce satellite) sont sensiblement identiques, c'est-à-dire que le produit scalaire de ces deux vecteurs est sensiblement égal à 1. En outre, les signaux de synchronisation radio étant généralement récurrents, on supposera que $c. T_i \gg D$ où $T_i$ est la période de récurrence du signal et $D$ est l'étendue spatiale de la zone zone géographique $Z$, cette condition permettant de lever l'ambiguïté sur le temps d'émission de la séquence de synchronisation. La valeur typique de $D$ peut aller jusqu'à quelques centaines de mètres voire quelques kilomètres.

L'idée à la base de l'invention est d'élaborer une statistique hybridant les pseudodistances satellitaires $\rho_{i,j}^{sat}$ et les pseudodistances radio $\rho_{i,n}^{rad}$. Etant donné qu'il est fort peu probable que les signaux de synchronisation radio puissent être tous corrompus, cette hybridation serrée permet de vérifier de manière rapide et sensible si l'un des signaux GNSS est erroné.

Pour ce faire, on construit un vecteur d'obervation hybride $Y$ agrégeant les pseudodistances satellitaires $\rho_{i,j}^{sat}$ mesurées par chacune des plateformes mobiles $PT_i$, $i = 1,..,N$ et les pseudodistance radio $\rho_{i,n}^{rad}$ mesurées pour chaque couple de plateformes $(PT_i, PT_n)$, $i, n = 1,..,N$. Plus précisément, à chaque instant $\tau$, on obtient un vecteur $Y(\tau)$, ou plus simplement $Y$, de taille $K^{sat} + K^{rad}$, par concaténation d'un premier vecteur représentatif des pseudodistances satellitaires $Y^{sat}$ et d'un second vecteur représentatif des pseudodistances radio, $Y^{rad}$, soit :

$$Y^T = [Y^{sat^T} \quad Y^{rad^T}] \tag{2-1}$$

avec

$$Y^{sat^T} = \left[\rho_{i,j}^{sat}, i = 1,..,N, j \in V(RX_i)\right] \tag{2-2}$$

où $V(RX_i)$ est la liste des indices des satellites en visibilité du récepteur $RX_i$, et

$$Y^{rad^T} = \left[\rho_{i,n}^{rad}, i, n = 1,..,N, i \neq n\right] \tag{2-3}$$

étant entendu dans (2-3) qu'une plateforme mobile peut recevoir un signal de synchronisation radio de toutes les autres.

On a noté $K^{sat} = \sum_{i=1}^{N} K_i^{sat}$ , avec $K_i^{sat} = Card\left(V(RX_i)\right)$ , le nombre de pseudodistances satellitaires mesurées par les différents récepteurs, et $K^{rad} = N(N - 1)$.

A partir de ce vecteur d'observation, on cherche à estimer le vecteur d'état global **X** agrégeant les positions et les décalages d'horloge interne respectifs des différents récepteurs GNSS $RX_i$, $i = 1,..,N$. Plus précisément, le vecteur d'état global **X** est construit par concaténation des vecteurs d'état individuels des différents récepteurs :

$$X^T = \left[X_1^T, X_2^T, \ldots, X_N^T\right] \tag{3-1}$$

où $X_i^T = \left[x_i, y_i, z_i, \delta t_i^{sat}\right]$ est le vecteur d'état du récepteur GNSS $RX_i$, hébergé par la plateforme mobile $PT_i$, où $x_i, y_i, z_i$ sont les coordonnées cartésiennes de la position de la plateforme dans un référentiel géocentrique et $\delta t_i^{sat}$ est le décalage de l'horloge interne de $RX_i$ par rapport à l'horloge de référence de la constellation satellitaire.

Le vecteur d'état global $\hat{X}$ peut être obtenu par simple concaténation des vecteurs d'état $X_i^T$ communiqués par chaque plateforme $PT_i$, $i = 1,..,N,$ fournies, de manière autonome et indépendante, par les récepteurs GNSS hébergés sur les différentes plateformes.

Le vecteur d'état global peut également être réestimé (au sens d'un estimation LSE) par approximations sucessives à partir de la valeur initiale précédente, $\hat{X}(0)$.

Plus précisément, à chaque itération $t$, il est procédé à la mise à jour de l'estimation du vecteur d'état global au moyen de l'algorithme de Gauss-Newton :

$$\delta Y(t) = Y(t) - h\big(\hat{X}(t-1)\big) \tag{4-1}$$

$$\widehat{\delta X(t)} = \left(H_G{}^T W H_G)\right)^{-1} H_G{}^T W \delta Y(t) \tag{4-2}$$

$$\hat{X}(t) = \widehat{X(t-1)} + \widehat{\delta X(t)} \tag{4-3}$$

où **h** est une fonction d'observation globale donnant les pseudodistances satellitaires et radio en fonction du vecteur d'état global, $H_G$ est une matrice jacobienne (dite aussi matrice géométrique, obtenue par linéarisation de la fonction d'observation **h(X)** au point de dernière estimation $\hat{X}(t\text{-}1)$), de taille $K \times 4N$ et **W** est une matrice diagonale de pondération de taille $(K^{sat} + K^{rad}) \times (K^{sat} + K^{rad})$, par exemple égale à l'inverse de la matrice de covariance des erreurs de mesure sur les pseudodistances (supposées décorelées) et $\delta Y(t)$ est la différence entre l'observation réelle **Y(t)** et l'observation théorique **h** $(\hat{X}(t\text{-}1))$ calculée à partir du vecteur d'état de l'itération précédente. En d'autres termes, $\delta Y(t)$ caractérise le vecteur des residus intermédiaires à l'étape $t$. Les itérations se poursuivent jusqu'à ce qu'un critère d'arrêt soit satisfait, par exemple jusqu'à ce que la norme du vecteur de mise à jour, $\|\delta \hat{X}\|$, soit inférieure à un seuil prédéterminé ou qu'un nombre maximal d'itérations soit atteint. On obtient alors l'estimation $\hat{X} = \widehat{X(t_{end})}$. La matrice $H_G$ peut être qualifiée de globale dans la mesure où, d'une part, elle porte sur l'ensemble des (récepteurs GNSS hébergés sur les) plateformes mobiles et que, d'autre part, elle prend en compte l'ensemble des pseudodistances, qu'elles soient satellitaires ou radio. Plus précisément, la matrice géométrique globale $H_G$ peut s'exprimer sous la forme :

$$H_G = \begin{bmatrix} H^{sat} \\ H^{rad} \end{bmatrix} \tag{5-1}$$

avec :

$$H_G = \begin{bmatrix} H_1^{sat} \\ \vdots \\ H_N^{sat} \end{bmatrix} \text{ de taille } K^{sat} \times 4 \text{ et } H_i^{sat} = \begin{bmatrix} -u_{i,j(1)}^T & 1 \\ \vdots & \vdots \\ -u_{i,j(K_i^{sat})}^T & 1 \end{bmatrix} \text{ de taille } K_i^{sat} \times 4 \tag{5-2}$$

et

$$H^{rad} = \begin{bmatrix} \vdots & \vdots \\ -v_{i,n}^T & 1 \\ \vdots & \vdots \\ v_{i,n}^T & -1 \\ \vdots & \vdots \end{bmatrix} \text{ de taille } K^{rad} \times 4 \qquad (5\text{-}3)$$

les vecteurs $u_{i,j(1)}, \ldots, u_{i,j(Ki)}$ étant les vecteurs directeurs des droites joignant la plateforme mobile $PT_i$ et les satellites $SAT_{j(1)}, \ldots, SAT_{j(K_i^{sat})}$ en visibilité de $RX_i$ et $v_{i,n}$ étant le vecteur directeur de la droite joignant la plateforme mobile $PT_i$ et la plateforme mobile $PT_n$, c'est à dire: $u_{i,j}^T = \left( \dfrac{x_j^{SAT}-x_i^{PT}}{d_{i,j}^{sat}}, \dfrac{y_j^{SAT}-y_i^{PT}}{d_{i,j}^{sat}}, \dfrac{z_j^{SAT}-z_i^{PT}}{d_{i,j}^{sat}} \right)$ et

$v_{i,n}^T = \left( \dfrac{x_n^{PT}-x_i^{PT}}{d_{i,n}^{rad}}, \dfrac{y_n^{PT}-y_i^{PT}}{d_{i,n}^{rad}}, \dfrac{z_n^{PT}-z_i^{PT}}{d_{i,n}^{rad}} \right)$ où $x_i^{PT}, y_i^{PT}, z_i^{PT}$ et ( $x_j^{SAT}, y_j^{SAT} n y_j^{SAT}$ ) sont les coordonnées cartésiennes respectives de la plateforme $PT_i$ et satellite $SAT_j$ dans le référentiel géocentrique. Par souci de clarté, seuls ont été indiqués dans la matrice $H^{rad}$ ci-dessus les éléments relatifs au couple de plateformes $PT_i$, $PT_n$.

L'écart entre l'observation réelle $Y$ et l'observation théorique $h(\hat{X})$ donne le vecteur des résidus (de pseudodistances), $R$. Ce vecteur est orthogonal à l'espace généré par les colonnes de $H_G$ (au sens d'une métrique pondérée par $W$ qui est par exemple l'inverse de la matrice de covariance des erreurs de mesure sur les pseudodistances). Ainsi, si l'on considère par exemple la dernière itération de l'algorithme de Gauss-Newton, le vecteur des résidus a pour expression

$R = Y - h(\hat{X}) \approx \delta Y - H_G \widehat{\delta X}$   et $H_G{}^t W. R = 0$. On considère alors l'espace de parité, c'est-à-dire l'espace orthogonal à l'espace de projection, généré par les colonnes de $H_G$. Cet espace de parité est engendré par les colonnes d'une matrice, dite matrice de parité $\Pi$ associée à $H_G$ définie par :

$$\Pi^T \left( \Gamma_G^{-1/2} H_G \right) = 0 \qquad (6)$$

où $\Gamma_G$ est la matrice de covariance de $Y$, autrement dit des pseudodistances, la multiplication par la matrice $\Gamma_G^{-1/2}$ dans (6) ayant pour objet de normer les vecteurs colonnes de $H_G$ générant l'espace de projection.

La matrice de covariance $\Gamma_G$ se présente sous la forme d'une matrice par blocs :

$$\Gamma_G = \begin{bmatrix} \Gamma^{sat} & 0 \\ 0 & \Gamma^{rad} \end{bmatrix} \qquad (7)$$

où $\Gamma^{sat}$ est la matrice de covariance de $Y^{sat}$ et $\Gamma^{rad}$ est la matrice de covariance de $Y^{rad}$.

On calcule ensuite une variable de décision, $T$, comme la norme de la projection du vecteur des pseudodistances, $Y$, (ou de manière équivalente du vecteur $R$ de leurs résidus) dans l'espace de parité, à savoir :

$$T = P^T P \qquad (8\text{-}1)$$

avec

$$P = \Pi \Gamma_G^{-1/2} Y \qquad (8\text{-}2)$$

La taille du vecteur $P$ est la dimension de l'espace de parité, à savoir $K^{sat} - 4N + K^{rad}$. En effet, la redondance introduite par l'équation de navigation est de $K_i^{sat} - 4$ par récepteur GNSS pour les pseudodistances satellitaires et de $K^{rad}$ pour l'ensemble des pseudodistances radio.

Compte-tenu de (8-1), la variable de décision peut encore s'écrire :

$$T = Y^T \Gamma_G^{-1/2} \Pi^T \Pi \Gamma_G^{-1/2} Y \qquad (8\text{-}3)$$

En absence de biais (hypothèse $\mathfrak{H}_0$ ), la variable de décision $T$ suit une statistique du $\chi^2$, à $K^{sat} + K^{rad}$ - $4N$ degrés de liberté, la pondération des pseudodistances par l'inverse de leurs écarts-type respectifs (éléments diagonaux de la matrice $\Gamma_G^{-1/2}$ ) dans (8-2) permettant de considérer les éléments du vecteur $P$ comme des échantillons de variables aléatoires indépendantes suivant la loi normale centrée réduite $\mathcal{N}(0,1)$.

Lorsque la variable de décision $T$ est supérieure à une valeur de seuil prédéterminée, l'hypothèse $\mathfrak{H}_0$ est rejetée et un défaut d'intégrité des pseudodistances GNSS est détectée. A l'inverse, lorsque la variable de décision est inférieure à cette valeur de seuil, les mesures GNSS sont considérées comme intègres.

La valeur de seuil s peut être fixée par :

$$s = \sqrt{F_{\chi^2}^{-1}\big(1 - P_{fa}, K^{sat} + K^{rad} - 4N\big)} \tag{9}$$

où $F_{\chi^2}^{-1}(.,L)$ est la fonction de répartion inverse de la loi du $\chi^2$ à $L$ degrés de liberté et $P_{fa}$ est la probabilité de fausse alarme, c'est-à-dire ici la probabilité qu'un défaut d'intégrité soit détectée dans l'hypothèse $\mathfrak{H}_0$ , autrement dit :

$$P_{fa} = Pr(T > s|\ \mathfrak{H}_0) \tag{10}$$

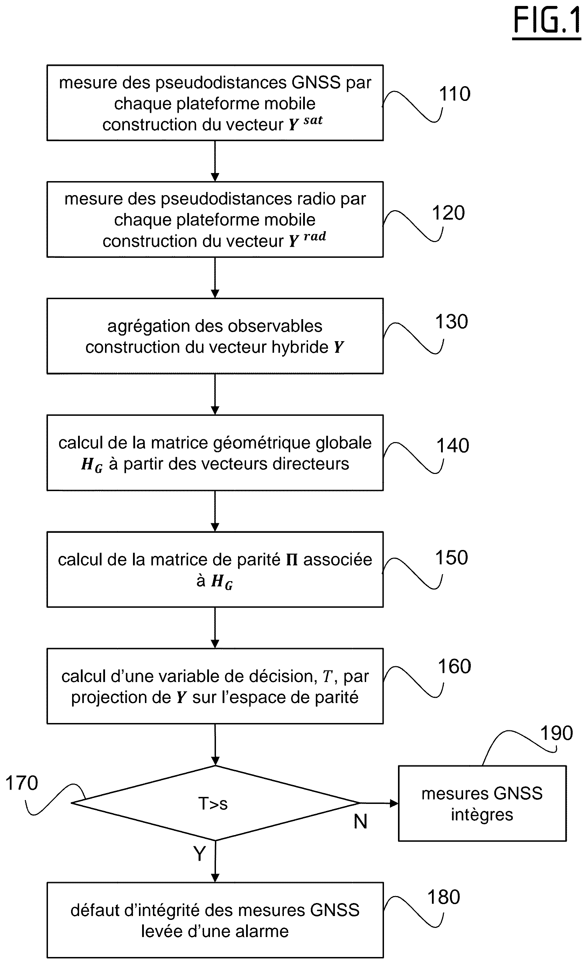

La figure 1 représente de manière schématique une méthode de vérification d'intégrité de mesures GNSS selon un mode général de réalisation de l'invention.

On considère à nouveau le scenario d'un système de positionnement GNSS à $M$ satellites et $N$ plateformes mobiles connectées, chaque plateforme mobile étant équipée d'un récepteur GNSS et d'un émetteur/ récepteur radio adapté à émettre et recevoir un signal de synchronisation comme décrit plus haut. On suppose en outre que chacun des récepteurs GNSS a en visibilité au moins 4 satellites et peut donc estimer sa position de manière indépendante. Si l'ensemble des plateformes ne vérifie pas ces conditions on réduit cet ensemble à un sous-ensemble les vérifiant.

Dans une première étape 110, chaque récepteur GNSS équipant une plateforme mobile mesure les pseudodistances satellitaires qui le sépare des différents satellites qu'il a en visibilité, soit $Y^{sat}$ le vecteur constitué par ces observables pour l'ensemble des plateformes mobiles. Ces mesures de pseudodistances peuvent être fournies comme données brutes par un récepteur GNSS conventionnel.

A l'étape 120, chaque émetteur/récepteur radio d'une plateforme mobile mesure les pseudodistances radio qui le sépare de chacun des autres au moyen de signaux de synchronisation radio, soit $Y^{rad}$ le vecteur constitué par ces observables pour l'ensemble des couples de plateformes mobiles.

A l'étape 130, on agrège les observables GNSS et les observables radio des différentes plateformes mobiles, autrement dit on concatène les vecteurs $Y^{sat}$ et $Y^{rad}$ pour obtenir un vecteur d'obervation hybride $Y$.

A l'étape 140, on calcule une matrice géométrique globale, $H_G$, permettant de passer d'un vecteur d'état global, $X$, représentatif des positions des différentes plateformes mobiles et des décalages respectifs de leur horloges internes, au vecteur d'observation hybride $Y$. La matrice géométrique globale, $H_G$, dépend des vecteurs directeurs des droites joignant chaque plateforme mobile aux satellites que le récepteur GNSS embarqué a en visibilité, ainsi que des vecteurs directeurs des droites joignant chaque plateforme mobile aux autres plateformes mobiles, ladite matrice géométrique globale . Avantageusement , la matrice $H_G$ est construite par concatenation des matrices $H^{sat}$ et $H^{rad}$ comme décrit plus haut en relation avec les expressions (5-1) à (5-3).

A l'étape 150, on calcule la matrice de parité $\Pi$ associée à $H_G$ définie par $\Pi^T\left(\Gamma_G^{-1/2}H_G\right)=0$ où $\Gamma_G$ est la matrice de covariance des pseudodistances.

Les colonnes de la matrice de parité génèrent un espace de parité orthogonal à l'espace généré par les vecteurs colonnes de $H_G$.

A l'étape 160, on calcule une variable de décision, $T$, obtenue comme la norme quadratique de la projection du vecteur $Y$ des pseudodistances (ou, de manière équivalente du vecteurs des résidus) sur l'espace de parité, soit

$$P = \Pi\Gamma_G^{-1/2}Y \text{ , soit } T = P^T P.$$

A l'étape 170, on compare la valeur prise par cette variable de décision avec un seuil prédéterminé, $s$, et, si est supérieure à ce seuil, un défaut d'intégrité des pseudodistances GNSS (ou radio) est détectée. Une alarme est alors levée en 180.

Dans la négative, en 190, les mesures GNSS et radio sont considérées comme intègres et les positions des différentes plateformes mobiles peuvent être calculées à partir des pseudodistances ainsi validées. Différentes variantes pourront être envisagées par l'homme du métier. Selon une première variante, chaque récepteur GNSS $RX_i$ pourra résoudre sa propre équation de navigation (faisant intervenir la matrice $H_i^{sat}$) à partir des pseudodistances qu'il a mesurées pour obtenir sa position et son décalage d'horloge interne. Selon une deuxième variante, les récepteurs GNSS pourront résoudre une équation de navigation globale (faisant alors intevenir la matrice géométrique $H^{sat}$) sur la base de l'ensemble des pseudodistances satellitaires mesurées. Selon une troisième variante, les plateformes mobiles pourront résoudre une équation de navigation globale (faisant intervenir la matrice $H_G$) sur la base de l'ensemble des pseudodistances satellitaires et radio. Les deux dernières variantes permettent d'obtenir une estimation de l'ensemble des positions et des décalages d'horloge interne de l'ensemble des récepteur GNSS.

Lorsqu'un défaut d'intégrité des mesures est détecté, il est possible de déterminer si l'une des pseudodistances satellitaires est corrompue et dans ce cas de l'éliminer. Pour cela, on supprime, tour à tour, une pseudodistance satellitaire suspectée d'erreur et l'on répète le test d'intégrité sur les $K^{sat}$ - 1 pseudodistances satellitaires restantes hybridées avec les $K^{rad}$ pseudodistances radio jusqu'à ce que la condition $T < s'$ avec

$$s' = \sqrt{F_{\chi^2}^{-1}\left(1 - P_{fa}, K^{sat} - 1 + K^{rad} - 4N\right)}.$$

Alternativement, on peut éliminer tour à tour une plateforme mobile $PT_i$ de du réseau de plateformes et répéter le test d'intégrité sur les $K^{sat} - K_i^{sat} - 4(N-1)$ pseudodistances satellitaires et les $K^{rad}$ - 2($N$ - 1) pseudodistances radio restantes, jusqu'à ce que la condition $T < s''$ avec $s'' = \sqrt{F_{\chi^2}^{-1}\left(1 - P_{fa}, K^{sat} - K_i^{sat} + K^{rad} - 6N + 6\right)}$ soit vérifiée pour une valeur d'indice $i \in \{1,..,N\}$.

Dans tous les cas, une fois trouvé un ensemble de mesures GNSS intègres (hypothèse $\mathfrak{H}_0$), il est possible de calculer les positions et les décalages d'horloge interne des différentes plateformes selon l'une des variantes évoquées précédemment.

La méthode de vérification de l'intégrité de mesures GNSS précédemment décrite peut être déclinée selon un mode centralisé ou un mode distribué de réalisation.

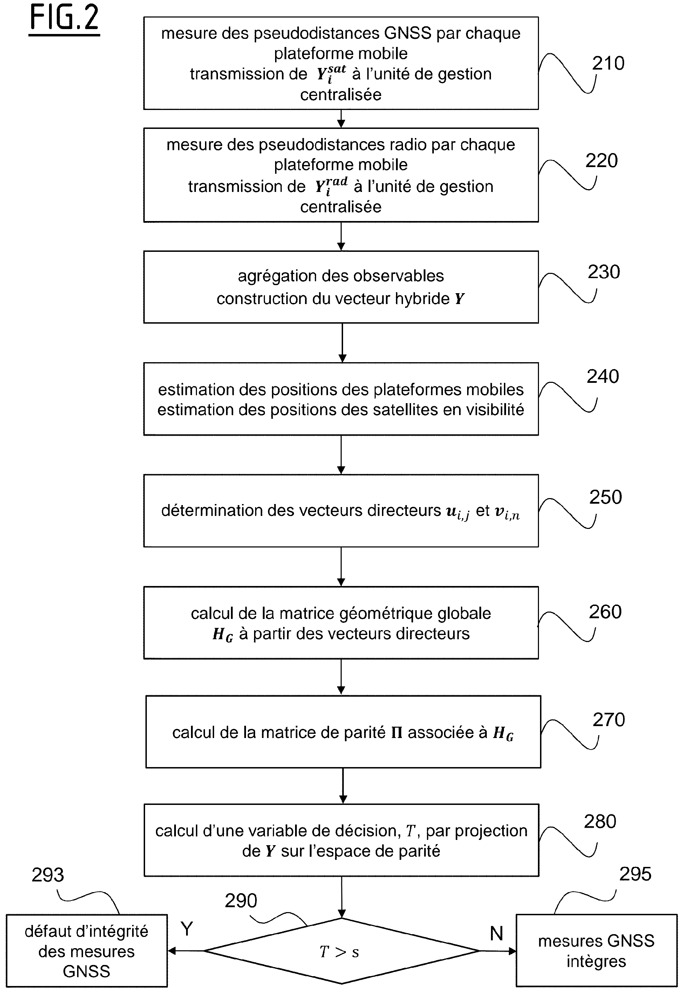

La figure 2 illustre de manière schématique une méthode de vérification de l'intégrité de mesures GNSS selon un mode centralisé de réalisation de l'invention.

Dans une première étape, 210, les récepteurs GNSS équipant les différentes plateformes mobiles mesurent les pseudodistances respectives qui les séparent des différents satellites qu'ils ont en visibilité. Ces mesures de pseudodistances peuvent être fournies comme données brutes par un récepteur GNSS conventionnel. Chaque plateforme mobile $PT_i$ transmet alors le vecteur de ces pseudodistances satellitaires, soit $Y_i^{sat} = \left[\rho_{i,j}^{sat}, j \in V(RX_i)\right]^T$ à une unité de gestion centralisée. L'unité de gestion centralisée agrège ces mesures par exemple en concaténant les vecteurs $Y_i^{sat}, i = 1,.., N$ pour former le vecteur $Y^{sat}$ donnant l'ensemble des pseudodistances satellitaires mesurées par les plateformes mobiles.

Dans une seconde étape, 220, chacun des émetteurs/récepteurs radio équipant les différentes plateformes mobiles mesure à partir des signaux de synchronisation qu'il reçoit les pseudodistances qui le sépare des autres plateformes mobiles. Chaque plateforme mobile $PT_i$ transmet alors le vecteur de ces pseudodistances radio, $Y_i^{rad} = \left[\rho_{i,n}^{rad}, n = 1,.., N, n \neq i\right]^T$, à l'unité de gestion centralisée. L'unité de gestion centralisée agrège ces mesures par exemple en concaténant les vecteurs $Y_i^{rad}, i = 1,.., N$ pour former le vecteur $Y^{rad}$ donnant l'ensemble des pseudodistances radio mesurées par les plateformes mobiles.

En 230, l'unité de gestion centralisée agrège les pseudodistances satellitaire et les pseudodistances radio, par exemple en concaténant les vecteurs $Y^{sat}$ et $Y^{rad}$ pour former un vecteur d'observation hybride, $Y$.

Les plateformes mobiles transmettent ensuite, à l'étape 240, une estimation de leurs positions respectives et, le cas échéant des positions des satellites que les récepteurs GNSS ont en visibilité. Les positions des plateformes peuvent avoir été estimées classiquement au moyen d'un positionnement GNSS individuel. Les positions des satellites en visibilité sont obtenues de manière connue en soi, au moyen des messages d'éphémérides transmis par ces satellites.

A l'étape 250, l'unité de gestion centralisée détermine les vecteurs directeurs $u_{i,j}$ et $v_{i,n}$ à partir des coordonnées des positions estimées des satellites et des plateformes mobiles. On pourra avantageusement considérer que les

vecteurs directeurs $\boldsymbol{u}_{i,j}$ ne dépendent en fait que de l'indice $j$ dans la mesure où la distance entre plateformes mobiles est très faible au regard de la distance moyenne entre ces plateformes. Les positions des différents satellites pourront être aussi directement obtenues par le centre de gestion centralisée à partir des messages d'éphémérides reçus par ce centre.

A l'étape 260, le centre de gestion centralisée construit la matrice géométrique globale, $\boldsymbol{H_G}$, à partir des vecteurs directeurs obtenus à l'étape précédente.

Le centre de gestion centralisée calcule ensuite en 270 la matrice de parité $\Pi$ associée à $\boldsymbol{H_G}$ définie par

$$\Pi^T\left(\Gamma_G^{-1/2}H_G\right)=0 \text{ (ce calcul peut être réalisé simplement par la fonction } null \text{ de Matlab).}$$

A l'étape 280, le centre de gestion centralisée calcule la valeur de la variable de décision $T = \boldsymbol{P^TP}$ avec

$$P = \Pi\Gamma_G^{-1/2}Y .$$

A l'étape 290, le centre de gestion centralisée compare cette valeur de la variable de décision $T$ avec un seuil $s$ prédéterminé (à partir d'une probabilité de fausse alarme) et conclut en 293 à une corruption des mesures GNSS si $T > s$ et en 295 à une intégrité de ces mesures dans le cas contraire. En cas de défaut d'intégrité détecté, l'unite de gestion centralisée peut en avertir l'ensemble des plateformes mobiles. Le cas échéant, l'unité de gestion centralisée peut ensuite procéder par élimination comme expliqué en relation avec la Fig. 1. Dès lors qu'elle a trouvé un ensemble intègre de mesures GNSS elle en avertit les plateformes mobiles. La mesure GNSS erronée, voire l'ensemble des mesures GNSS de la plateforme mobile en cause peuvent alors être purement et simplement être éliminées des observables pour un contrôle d'intégrité ultérieur.

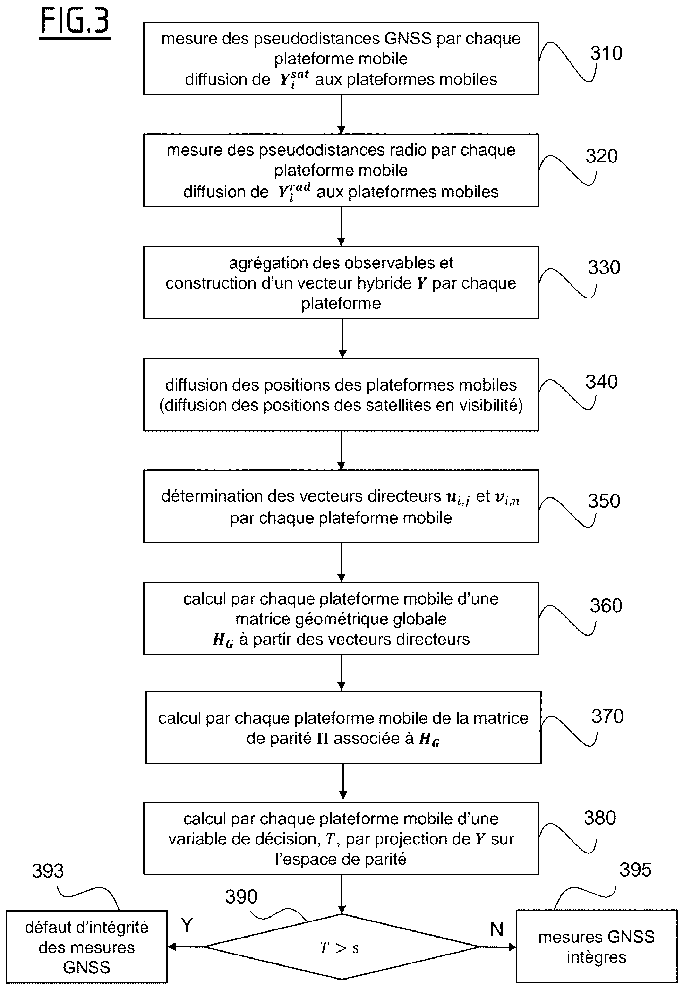

La figure 3 illustre de manière schématique une méthode de vérification d'intégrité de mesures GNSS selon un mode distribué de réalisation de l'invention.

Dans une première étape, 310, les récepteurs GNSS équipant les différentes plateformes mobiles mesurent les pseudodistances respectives qui les séparent des différents satellites qu'ils ont en visibilité. Chaque plateforme mobile $PT_i$ diffuse les pseudodistances satellitaires ainsi mesurées à l'ensemble des plateformes mobiles sous la forme d'un vecteur $Y_i^{sat}$ tel que défini plus haut.

Dans une seconde étape, 320, chacun des émetteurs/récepteurs équipant les différentes plateformes mobiles mesure à partir des signaux de synchronisation qu'il reçoit les pseudodistances qui le sépare des autres plateformes. Chaque plateforme mobile $PT_i$ diffuse les pseudodistances satellitaires ainsi mesurées à l'ensemble des plateformes mobiles sous la forme d'un vecteur $Y_i^{rad}$ tel que défini plus haut.

Chaque plateforme mobile agrège en 330 les pseudodistances satellitaires et les pseudodistances radio, par exemple en concaténant les vecteurs $\boldsymbol{Y^{sat}}$ et $\boldsymbol{Y^{rad}}$ pour former un vecteur d'observation hybride. Il convient de noter que dans ce mode de réalisation les vecteurs $\boldsymbol{Y^{sat}}$ et $\boldsymbol{Y^{rad}}$ peuvent différer d'une plateforme à l'autre en fonction des pseudodistances effectivement reçues.

Les plateformes mobiles diffusent ensuite, à l'étape 340, une estimation de leurs positions respectives obtenues par exemple par un positionnement GNSS individuel. Elles transmettent également, le cas échéant, les positions des satellites que les récepteurs GNSS ont en visibilité. Cette dernière transmission peut être toutefois omise si les plateformes mobiles ont un même ensemble de satellites en visibilité.

A l'étape 350, chaque plateforme mobile détermine les vecteurs directeurs $u_{i,j}^T$ et $v_{i,n}^T$ à partir des coordonnées des positions estimées des satellites et des plateformes mobiles.

A l'étape 360, chaque plateforme mobile construit une matrice géométrique globale, $\boldsymbol{H_G}$, à partir des vecteurs directeurs obtenus à l'étape précédente. Dans ce mode de réalisation, la matrice $\boldsymbol{H_G}$ peut toutefois différer d'une plateforme à l'autre en fonction des positions des autres plateformes (et donc des vecteurs directeurs) effectivement reçues.

Chaque plateforme mobile calcule ensuite en 370 la matrice de parité $\Pi$ associée à $\boldsymbol{H_G}$ définie par

$$\Pi^T\left(\Gamma_G^{-1/2}H_G\right)=0 \text{, et en déduit, en 380, la valeur de la variable de décision } T = \boldsymbol{P^T P} \text{ avec } P = \Pi\Gamma_G^{-1/2}Y .$$

A l'étape 390, chaque plateforme mobile compare cette valeur de la variable de décision $T$ avec un seuil s prédéterminé et conclut en 393 à une corruption des mesures GNSS si $T > s$ et, en 395, à une intégrité de ces mesures dans le cas contraire. A la différence du mode de centralisé, la valeur de seuil peut toutefois différer d'une plateforme à l'autre en en raison du degré de liberté $K^{sat} + K^{rad} - 4N$ localement applicable, le nombre de pseudodistances satellitaires et/ou radio disponibles n'étant pas nécessairement identique pour toutes les plateformes. Lorsqu'une plateforme mobile détecte un défaut d'intégrité, elle peut procéder par élimination comme expliqué en relation avec la Fig. 1. Dès lors qu'elle a trouvé un ensemble intègre de mesures GNSS et qu'au moins 4 de ses pseudodistances satellitaires font partie de cet ensemble, la plateforme mobile peut estimer sa position de manière autonome à partir de ses mesures GNSS.

**Revendications**

1. Méthode de vérification de l'intégrité de mesures GNSS effectuées par une pluralité de récepteurs GNSS embarqués sur des plateformes mobiles connectées, chaque récepteur GNSS embarqué recevant des signaux GNSS d'une pluralité de satellites qu'il a en visibilité, chaque plateforme mobile étant en outre équipée d'un émetteur/récepteur radio adapté à émettre et à recevoir un signal de synchronisation radio, **caractérisée en ce que**

   - on construit (110, 120) un premier vecteur d'observation ($Y^{sat}$) donnant, pour chaque récepteur GNSS, les pseudodistances mesurées par ce récepteur, dites pseudodistances satellitaires, le séparant des satellites qu'il a en visibilité et un second vecteur d'observation ($Y^{rad}$) donnant, pour chaque émetteur/récepteur radio, les pseudodistances mesurées par cet émetteur/récepteur radio, dites pseudodistances radio, le séparant des autres émetteurs/ récepteurs radio ;
   - on agrège (130) les pseudodistances satellitaires et les pseudodistances radio en concaténant les premier et second vecteurs d'observation pour former un vecteur d'observation hybride ($Y$) ;
   - on calcule (140) une matrice géométrique globale ($H_G$) permettant de passer d'un vecteur d'état ($X$) représentatif des positions et des décalages d'horloge interne respectifs desdits récepteurs GNSS embarqués au dit vecteur d'observation hybride ($Y$), ladite matrice géométrique globale étant obtenue à partir des vecteurs directeurs ($u_{i,j}$) des droites joignant chaque récepteur GNSS aux satellites qu'il a en visibilité, d'une part, et des vecteurs directeurs ($v_{i,n}$) des droites joignant chaque émetteur/récepteur radio aux autres émetteurs récepteurs radio, d'autre part ;
   - on calcule (150) une matrice de parité ($\Pi$) associée à ladite matrice géométrique globale, les vecteurs colonne de la matrice de parité engendrant un espace, dit espace de parité, orthogonal à l'espace engendré par les vecteurs colonne de ladite matrice géométrique ;
   - on calcule (160) la valeur d'une variable de décision ($T$) comme norme quadratique de la projection du vecteur d'observation hybride ($Y$) sur l'espace de parité ;
   - on compare (170) ladite valeur de la variable de décision à un seuil prédéterminé ($s$) et, si cette valeur excède ladite valeur de seuil, les mesures GNSS sont considérées comme corrompues (180) et, dans le cas contraire, sont considérées comme intègres (190).

2. Méthode de vérification de l'intégrité de mesures GNSS selon la revendication 1, **caractérisée en ce que** la matrice géométrique globale $H_G$ est obtenue comme $H_G = \begin{bmatrix} H^{sat} \\ H^{rad} \end{bmatrix}$ où $H_G = \begin{bmatrix} H_1^{sat} \\ \vdots \\ H_N^{sat} \end{bmatrix}$ est une matrice de taille $K^{sat} \times 4$

   avec $H_i^{sat} = \begin{bmatrix} -u_{i,j(1)}^T & 1 \\ \vdots & \vdots \\ -u_{i,j(K_i^{sat})}^T & 1 \end{bmatrix}$ matrice de taille $K_i^{sat} \times 4$ où les vecteurs $u_{i,j(1)},...,u_{i,j(Ki)}$ sont les vecteurs directeurs des droites joignant le récepteur GNSS embarqué sur la plateforme mobile $PT_i$ et les satelittes

   $SAT_{j(1)},..., SAT_{j(K_i^{sat})}$ en visibilité du récepteur GNSS $RX_i$ et $H^{rad} = \begin{bmatrix} \vdots & \vdots \\ -v_{i,n}^T & 1 \\ \vdots & \vdots \\ v_{i,n}^T & -1 \\ \vdots & \vdots \end{bmatrix}$ est une matrice de taille

   $K^{rad} \times 4$ où $v_{i,n}$ est le vecteur directeur de la droite joignant l'émetteur/récepteur radio de la plateforme mobile $PT_i$ et l'émetteur récepteur radio de la plateforme mobile $PT_n$, $K^{sat}$ étant le nombre total de pseudodistances satellitaires et $K^{rad}$ étant le nombre total de pseudodistances radio.

3. Méthode de vérification de l'intégrité de mesures GNSS selon la revendication 1 ou 2, **caractérisée en ce que** la matrice de parité, $\Pi$, associée à ladite matrice géométrique globale, $H_G$, est obtenue à partir de $\Pi^T \left( \Gamma_G^{-1/2} H_G \right) = 0$ où $\Gamma_G$ est une matrice diagonale donnant la covariance des pseudodistances.

4.  Méthode de vérification de l'intégrité de mesures GNSS selon l'une des revendications précédentes, **caractérisée en ce que** la variable de décision $T$ est la norme quadratique, $T = \boldsymbol{P}^T \boldsymbol{P}$, du vecteur $\boldsymbol{P}$, projection de $\mathbf{Y}$ sur l'espace de parité avec $\boldsymbol{P} = \Pi \Gamma_G^{-1/2} \mathbf{Y}$ .

5.  Méthode de vérification de l'intégrité de mesures GNSS selon l'une des revendications précédentes, **caractérisée en ce que** le seuil est déterminé par $s = \sqrt{F_{\chi^2}^{-1}\left(1 - P_{fa}, K^{sat} + K^{rad} - 4N\right)}$ où $F_{\chi^2}^{-1}(.,L)$ est la fonction de répartition inverse de la loi du $\chi^2$ à L degrés de liberté, $P_{fa}$ est une probabilité souhaitée de fausse alarme, $K^{sat}$ est le nombre total de pseudodistances satellitaires, $K^{rad}$ est le nombre total de pseudodistances radio et $N$ est le nombre de plateformes mobiles.

6.  Méthode de vérification de l'intégrité de mesures GNSS selon l'une des revendications précédentes, **caractérisée en ce que** si les mesures GNSS sont considérées comme corrompues, on élimine tour à tour une pseudodistance satellitaire et on applique la méthode de vérification sur les mesures GNSS restantes.

7.  Méthode de vérification de l'intégrité de mesures GNSS selon l'une des revendications 1 à 5, **caractérisée en ce que**, si les mesures GNSS sont considérées comme corrompues, une alarme est transmise à l'ensemble des plateformes mobiles.

8.  Méthode de vérification de l'intégrité de mesures GNSS selon l'une des revendications précédentes, **caractérisée en ce que** chaque récepteur GNSS embarqué sur une plateforme mobile mesure les pseudodistances satellitaires qui le sépare des satellites qu'il a en visibilité et les transmet (210) à une unité de gestion centralisée qui les agrège pour former le premier vecteur d'observation, $\mathbf{Y}^{sat}$, et que chaque émetteur/ récepteur radio mesure les pseudodistances radio qui le sépare des autres émetteurs/récepteurs radio et les transmet (220) à ladite unité de gestion centralisée qui les agrège pour former le second vecteur d'observation, $\mathbf{Y}^{rad}$.

9.  Méthode de vérification de l'intégrité de mesures GNSS selon la revendication 8, **caractérisée en ce que** chaque récepteur GNSS embarqué sur une plateforme mobile estime sa position de manière autonome au moyen des pseudodistances satellitaires qu'il a mesurées et transmet cette estimation au centre de gestion centralisée.

10. Méthode de vérification de l'intégrité de mesures GNSS selon la revendication 8 ou 9, **caractérisée en ce que** chaque récepteur GNSS embarqué sur une plateforme mobile estime la position des satellites qu'il a en visibilité à partir des messages d'éphémérides qu'ils envoient et transmet cette estimation au centre de gestion centralisée.

11. Méthode de vérification de l'intégrité de mesures GNSS selon la revendication 1, **caractérisée en ce que** chaque récepteur GNSS embarqué sur une plateforme mobile mesure les pseudodistances satellitaires qui le sépare des satellites qu'il a en visibilité et les diffuse (310) aux autres plateformes mobiles et que chaque émetteur/ récepteur radio équipant une plateforme mobile mesure les pseudodistances radio qui le sépare des autres émetteurs/récepteurs radio et les diffuse (320) aux autres plateformes mobiles, chaque plateforme mobile agrégeant (330) les pseudodistances satellitaires et les pseudodistances radio pour former ledit vecteur d'observation hybride, $\mathbf{Y}$.

12. Méthode de vérification de l'intégrité de mesures GNSS selon la revendication 11, **caractérisée en ce que** chaque récepteur GNSS embarqué sur une plateforme mobile estime sa position de manière autonome au moyen des pseudodistances satellitaires qu'il a mesurées et diffuse (340) cette estimation aux autres plateformes mobiles, chaque plateforme mobile en déduisant les vecteurs directeurs ($\boldsymbol{u}_{i,j}$) des droites joignant chaque récepteur GNSS aux satellites qu'il a en visibilité, d'une part, et les vecteurs directeurs ($\boldsymbol{v}_{i,n}$) des droites joignant chaque émetteur/récepteur radio aux autres émetteurs récepteurs radio, d'autre part, et construisant la matrice géométrique globale $\boldsymbol{H_G}$.

# FIG.1

mesure des pseudodistances GNSS par chaque plateforme mobile construction du vecteur $Y^{sat}$ — 110

mesure des pseudodistances radio par chaque plateforme mobile construction du vecteur $Y^{rad}$ — 120

agrégation des observables construction du vecteur hybride $Y$ — 130

calcul de la matrice géométrique globale $H_G$ à partir des vecteurs directeurs — 140

calcul de la matrice de parité $\Pi$ associée à $H_G$ — 150

calcul d'une variable de décision, $T$, par projection de $Y$ sur l'espace de parité — 160

170 — T>s

N — mesures GNSS intègres — 190

Y

défaut d'intégrité des mesures GNSS levée d'une alarme — 180

## FIG.2

mesure des pseudodistances GNSS par chaque plateforme mobile
transmission de $Y_i^{sat}$ à l'unité de gestion centralisée — 210

mesure des pseudodistances radio par chaque plateforme mobile
transmission de $Y_i^{rad}$ à l'unité de gestion centralisée — 220

agrégation des observables
construction du vecteur hybride $Y$ — 230

estimation des positions des plateformes mobiles
estimation des positions des satellites en visibilité — 240

détermination des vecteurs directeurs $u_{i,j}$ et $v_{i,n}$ — 250

calcul de la matrice géométrique globale $H_G$ à partir des vecteurs directeurs — 260

calcul de la matrice de parité $\Pi$ associée à $H_G$ — 270

calcul d'une variable de décision, $T$, par projection de $Y$ sur l'espace de parité — 280

293

290

défaut d'intégrité des mesures GNSS

Y ← $T > s$ → N

295

mesures GNSS intègres

## FIG.3

mesure des pseudodistances GNSS par chaque plateforme mobile
diffusion de $Y_i^{sat}$ aux plateformes mobiles 310

mesure des pseudodistances radio par chaque plateforme mobile
diffusion de $Y_i^{rad}$ aux plateformes mobiles 320

agrégation des observables et construction d'un vecteur hybride $Y$ par chaque plateforme 330

diffusion des positions des plateformes mobiles (diffusion des positions des satellites en visibilité) 340

détermination des vecteurs directeurs $u_{i,j}$ et $v_{i,n}$ par chaque plateforme mobile 350

calcul par chaque plateforme mobile d'une matrice géométrique globale $H_G$ à partir des vecteurs directeurs 360

calcul par chaque plateforme mobile de la matrice de parité $\Pi$ associée à $H_G$ 370

calcul par chaque plateforme mobile d'une variable de décision, $T$, par projection de $Y$ sur l'espace de parité 380

393
défaut d'intégrité des mesures GNSS

Y 390 $T > s$ N

395
mesures GNSS intègres

Europäisches
Patentamt

European
Patent Office

Office européen
des brevets

# RAPPORT DE RECHERCHE EUROPEENNE

Numéro de la demande

EP 26 15 5814

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | XIONG JUN ET AL: "An Integrity Monitoring Method for Multi-sensor Collaborative Navigation", 2020 IEEE/ION POSITION, LOCATION AND NAVIGATION SYMPOSIUM (PLANS), IEEE, 20 avril 2020 (2020-04-20), pages 461-468, XP033778788, DOI: 10.1109/PLANS46316.2020.9109996 * figure 1 * * Equations 11-16, 55-59 * * Introduction * * Section I-IV * ----- | 1-12 | INV. G01S19/20 ADD. G01S11/02 G01S19/08 G01S19/10 |
| Y | JOERGER MATHIEU ET AL: "Fault detection and exclusion using solution separation and chi-squared ARAIM", IEEE TRANSACTIONS ON AEROSPACE AND ELECTRONIC SYSTEMS, IEEE SERVICE CENTER, PISCATAWAY, NJ, US, vol. 52, no. 2, 1 avril 2016 (2016-04-01), pages 726-742, XP011612095, ISSN: 0018-9251, DOI: 10.1109/TAES.2015.140589 [extrait le 2016-05-18] * Equations 12-14, 53 * * Section II et V * ----- | 1-12 | |
| A | US 2014/232595 A1 (RIFE JASON [US]) 21 août 2014 (2014-08-21) * figure 3A * * alinéa [0044] * * alinéa [0070] * ----- | 7-12 | **DOMAINES TECHNIQUES RECHERCHES (IPC)** G01S |
| A | CN 111 273 687 A (UNIV SHANGHAI JIAOTONG) 12 juin 2020 (2020-06-12) * figure 3 * * alinéa [0029] * ----- -/-- | 10-12 | |

Le présent rapport a été établi pour toutes les revendications

| Lieu de la recherche | Date d'achèvement de la recherche | Examinateur |
|---|---|---|
| Munich | 20 mai 2026 | Bomart, Sébastien |

EPO FORM 1503 03.82 (P04C02)

page 1 de 2

Europäisches Patentamt

European Patent Office

Office européen des brevets

# RAPPORT DE RECHERCHE EUROPEENNE

**Numéro de la demande**

**EP 26 15 5814**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 3 316 001 A1 (CENTRE NAT ETD SPATIALES [FR]) 2 mai 2018 (2018-05-02) * alinéa [0075] * ----- | 10-12 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| Munich | 20 mai 2026 | Bomart, Sébastien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

page 2 de 2

## EP 4 787 024 A1

## ANNEXE AU RAPPORT DE RECHERCHE EUROPEENNE
## RELATIF A LA DEMANDE DE BREVET EUROPEEN NO.

EP 26 15 5814

20-05-2026

| Document brevet cité au rapport de recherche | Date de publication | Membre(s) de la famille de brevet(s) | Date de publication |
|---|---|---|---|
| US 2014232595 A1 | 21-08-2014 | US 2014232595 A1<br>WO 2013003662 A2 | 21-08-2014<br>03-01-2013 |
| CN 111273687 A | 12-06-2020 | AUCUN | |
| EP 3316001 A1 | 02-05-2018 | CN 107976704 A<br>EP 3316001 A1<br>KR 20180045831 A<br>US 2018114441 A1 | 01-05-2018<br>02-05-2018<br>04-05-2018<br>26-04-2018 |

EPO FORM P0460

## RÉFÉRENCES CITÉES DANS LA DESCRIPTION

**Littérature non-brevet citée dans la description**

- **M. JOERGER et al.** Fault detection and exclusion using solution separation and Chi-squared RAIM. *IEEE Trans. on Aerospace and Electronic Systems*, April 2016, vol. 52 (2), 726-742

- **J. RIFE**. Collaboration-enhanced receiver integrity monitoring. *Proc. of the 14th Intl' IEEE Conf. on Intelligent Transportation Systems*, 05 October 2011, 13-14